# FASCICULE DE BREVET EUROPEEN

(11) **EP 2 866 259 B1**
(45) Date de publication et mention de la délivrance du brevet: **08.04.2020**
(21) Numéro de dépôt: 14189637.3
(22) Date de dépôt: 21.10.2014
(51) Int. Cl.: H01L 23/58, H01L 49/02, H01L 29/66

(54) **Puce électronique comprenant des moyens de protection de sa face arrière**
Elektronischer Chip mit Mitteln zum Schutz dessen Rückseite
Electronic chip comprising means for protecting the rear surface thereof

(30) Priorité: 22.10.2013 FR 1360292
(43) Date de publication de la demande: 29.04.2015
(73) Titulaire: Commissariat à l'Énergie Atomique et aux Énergies Alternatives, 75015 Paris (FR)
(72) Inventeur: Lamy, Yann, 38960 SAINT ETIENNE DE CROSSEY (FR); Merle, Alain, 38950 QUAIX EN CHARTREUSE (FR); Parat, Guy-Michel, 38640 CLAIX (FR); Tria, Assia, 13390 AURIOL (FR)
(74) Mandataire: Brevalex

(56) Documents cités:
- EP-A1- 2 535 932
- US-A1- 2007 121 575
- US-A1- 2010 026 313
- US-A1- 2010 026 506
- US-A1- 2010 187 525
- US-B1- 6 236 103

## Description

### DOMAINE TECHNIQUE ET ART ANTÉRIEUR

L'invention concerne le domaine de la sécurité et de la protection des puces électroniques, et porte sur des moyens permettant d'empêcher l'accès à des données stockées dans le circuit électronique d'une puce électronique depuis sa face arrière. L'invention s'applique pour tout type de puce électronique : puce de téléphonie mobile, carte bancaire, carte santé, etc.

Les attaques que peut subir une puce électronique ont pour but d'accéder à des données confidentielles stockées dans la puce électronique dans le but de la cloner, de modifier les informations stockées, d'usurper l'identité de son possesseur, etc. Les puces électroniques peuvent être attaquées de multiples manières : chimique, physique, laser, électromagnétique, électrique, etc.

Ces attaques sont généralement mises en œuvre en suivant deux objectifs. Le premier consiste à acquérir ou retrouver une information interne manipulée par le circuit électronique de la puce (observation de la consommation électrique du circuit, du rayonnement électromagnétique produit par le circuit, « probing » du circuit, c'est-à-dire accéder physiquement au circuit en établissant une connexion électrique avec une piste interne du circuit, « probing » sans contact d'une piste interne, etc.). Le deuxième consiste à injecter des fautes (changement d'état d'un bit ou d'un groupe de bits via une injection de lumière, de laser, d'un rayonnement électromagnétique, etc.) pendant un calcul réalisé par le circuit électronique de la puce. Très souvent, une combinaison de ces différentes techniques est utilisée.

Pour se prémunir de telles attaques, il existe plusieurs types de protections. Le premier niveau de protection est la protection physique matérielle des puces. La face avant d'une puce électronique (face au niveau de laquelle se trouve le circuit électronique de la puce) peut par exemple être protégée en ajoutant des couches de protection particulières sur cette face avant. Ces couches de protection ont des propriétés physiques et/ou électriques qui changent lorsque la puce électronique subie des attaques extérieures, ce qui permet à la puce de détecter une attaque et le cas échéant, de se mettre en défaut.

L'idée de base d'une protection en face avant d'une puce électronique est d'implanter un écran métallique actif au niveau de la face supérieure du circuit électronique de la puce et de contrôler son intégrité. Initialement développé pour empêcher le probing physique (établissement d'une connexion électrique avec l'une des pistes sous-jacentes à la face avant de la puce), un tel écran se révèle également efficace pour éviter les interactions sans-contact avec le circuit électronique de la puce (injections de fautes via un laser ou un rayonnement électromagnétique, probing sans contact, observation du rayonnement électromagnétique du circuit électronique, etc.). Pour être efficace, il est nécessaire de disposer d'un mécanisme de contrôle de l'intégrité de l'écran, c'est-à-dire être capable de détecter une altération, même fine, de l'écran (coupure de piste, modification de la longueur des pistes, etc.).

La vraie faiblesse dans la sécurité des puces électroniques se trouve au niveau de la face arrière des puces électroniques. En effet, avec les techniques de gravure et d'amincissement actuelles, il est possible de s'approcher à une très faible distance du circuit électronique de la puce depuis sa face arrière et de venir récupérer les informations stockées ou injecter des fautes.

Il est donc nécessaire de protéger les puces électroniques au niveau de leur face arrière afin de prévenir toute intrusion.

Comme pour la face avant, l'utilité d'un écran disposé au niveau d'une face arrière de la puce électronique repose sur la capacité à contrôler son intégrité, rendant nécessaires des connexions entre la logique implémentée dans le circuit électronique et cet écran. En effet, par des manipulations physico-chimiques ou par une utilisation de faisceaux d'ions focalisés (FIB), il est relativement facile soit d'enlever cet écran de protection, par exemple par un amincissement du circuit, soit de l'altérer (par exemple en formant un trou dans l'écran permettant d'accéder à la face arrière de la puce). Un mécanisme de contrôle de l'intégrité de l'écran est donc indispensable.

Les mécanismes de type tout ou rien, c'est-à-dire vérifiant la présence de l'écran, sont facilement attaquables, par exemple via l'établissement d'une connexion par FIB faisant croire au circuit électronique que l'écran est toujours présent.

Le document US 2007/121575 A1 décrit une puce électronique destinée à contenir ou traiter des données à protéger de manière sécurisée. La face avant de la puce comporte une inductance qui, par couplage inductif à travers le substrat de la puce, détecte la présence d'un plan de masse conducteur disposé sur la face arrière de la puce. Une altération par une attaque de ce plan de masse conducteur induit une variation du couplage inductif entre les faces avant et arrière de la puce, ce qui conduit à une mise en défaut de la puce.

Cette solution offre toutefois un niveau de protection limité car une telle protection de la face arrière de la puce est assez simple et facilement copiable (plan métallique conducteur). De plus, les motifs inductifs sont généralement assez volumineux et de grandes dimensions, ce qui ne permet pas d'obtenir une protection localisée des données. Le couplage inductif est par ailleurs très faible si le substrat de la puce électronique conserve une certaine épaisseur. Enfin, le plan de masse conducteur se trouvant en face arrière est complètement déconnecté de l'inductance présente en face avant, ce qui représente potentiellement une fragilité pour la sécurité de la puce électronique.

Le document US 2010/026313 A1 divulgue un autre appareil comportant des structures de capacité proches d'une micropuce comprenant un circuit sensible à la sécurité. Un ensemble de circuit intégré détecte l'altération de la capacité associée à une structure de capacité positionnée à l'arrière de la micropuce.

### EXPOSÉ DE L'INVENTION

Un but de la présente invention est de proposer une puce électronique dont la face arrière est efficacement protégée contre différents types d'attaques, quelque soit l'épaisseur du substrat de la puce électronique, et permettant un contrôle fiable de l'intégrité de la face arrière de la puce électronique.

Pour cela, la présente invention propose une puce électronique comportant au moins :
- un circuit électronique disposé au niveau d'une face avant d'un substrat ;
- au moins un élément capacitif disposé au moins au niveau d'une face arrière du substrat et au moins en partie en regard du circuit électronique, et relié électriquement au circuit électronique par au moins une première et une deuxième liaisons électriques, la première liaison électrique comprenant au moins un premier via électriquement conducteur traversant le substrat, le circuit électronique étant adapté à mesurer la valeur de la capacité électrique de l'élément capacitif entre la première et la deuxième liaisons électriques, et
- au moins un deuxième via ou une tranchée traversant la face arrière du substrat et une partie de l'épaisseur du substrat, et disposé en regard du circuit électronique tel qu'une paroi de fond du deuxième via ou de la tranchée soit espacée du circuit électronique d'une distance non nulle.

L'élément capacitif désigne ici un élément formant une capacité électrique non nul au niveau de la face arrière du substrat et éventuellement dans une partie de l'épaisseur du substrat.

Une telle puce électronique comporte donc sa face arrière efficacement protégée grâce à l'élément capacitif présent au niveau de la face arrière du substrat et dont la valeur peut être contrôlée afin de s'assurer de l'intégrité de la face arrière. Un tel élément capacitif forme donc une protection efficace de la face arrière de la puce électronique, par exemple vis-à-vis d'un amincissement de la face arrière de la puce car un tel amincissement engendrerait une modification de la valeur de la capacité électrique de l'élément capacitif qui serait détectée par exemple grâce au contrôle de cette valeur réalisé par le circuit électronique de la puce. Or, le fait de ne pas pouvoir amincir le substrat de la puce électronique complique significativement les procédures de récupération des données qui y sont stockées aussi bien physiques (par exemple électriques) qu'électromagnétiques. Le circuit électronique peut notamment être adapté à être mis hors service dès qu'une attaque physique de la face arrière de la puce électronique est détectée (par exemple dans le cas d'un changement de valeur de la capacité de l'élément capacitif).

L'élément capacitif présent en face arrière de la puce électronique forme également un bon moyen de protection vis-à-vis d'attaques impliquant un rayonnement électromagnétique, cet élément capacitif formant un écran vis-à-vis d'un tel rayonnement.

De plus, la première liaison électrique entre l'élément capacitif et le circuit électronique est ici formée par une liaison physique réalisée notamment par le premier via électriquement conducteur, améliorant ainsi la sécurité du contrôle de l'intégrité de la face arrière de la puce du fait qu'il est beaucoup plus difficile d'interagir avec une telle liaison électrique physique qu'avec une liaison par couplage inductif.

En complément ou en alternative à l'élément capacitif présent en face arrière de la puce électronique, le ou les deuxièmes vias, ou la ou les tranchées, traversant la face arrière du substrat et une partie de l'épaisseur du substrat, en regard du circuit électronique, permettent d'assurer une protection de la face arrière de la puce électronique vis-à-vis d'attaques chimiques car une telle attaque provoquerait la destruction du circuit électronique de la puce en raison de la proximité du fond du ou des deuxièmes vias ou tranchées avec le circuit électronique. Ce ou ces deuxièmes vias, ou cette ou ces tranchées, forment dans ce cas des moyens de protection passifs vis-à-vis d'attaques chimiques de la face arrière de la puce électronique.

De plus, lorsque plusieurs deuxièmes vias ou tranchées sont réalisés à travers la face arrière de la puce électronique, ces éléments peuvent former dans ce cas une protection efficace vis-à-vis d'attaques faisant appel à des faisceaux laser.

De tels moyens de protection de la face arrière de la puce électronique présentent en outre une bonne stabilité temporelle et une indépendance vis-à-vis des conditions environnementales.

La deuxième liaison électrique peut comporter au moins un troisième via électriquement conducteur traversant le substrat ou peut comporter au moins une partie du substrat qui est électriquement conductrice ou semi-conductrice.

La distance entre la paroi de fond du deuxième via ou de la tranchée et le circuit électronique peut être inférieure ou égale à environ 20 µm, ou être inférieure ou égale à 20 µm. Une telle proximité entre la paroi de fond du deuxième via ou de la tranchée et le circuit électronique permet d'améliorer la protection de la face arrière de la puce électronique vis-à-vis d'attaques chimiques de la face arrière du substrat de la puce car dans ce cas, le circuit électronique est rapidement détruit par les agents chimiques utilisés pour attaquer la face arrière de la puce électronique.

La puce électronique peut comporter au moins :
- une première couche diélectrique recouvrant des parois latérales du premier via électriquement conducteur, des parois latérales et la paroi de fond du deuxième via ou de la tranchée, et la face arrière du substrat,
- une première couche électriquement conductrice continue recouvrant la première couche diélectrique au niveau des parois latérales du premier via électriquement conducteur, des parois latérales et de la paroi de fond du deuxième via ou de la tranchée, et d'au moins une partie de la face arrière du substrat, et recouvrant en outre une paroi de fond du premier via électriquement conducteur,
la première couche électriquement conductrice pouvant former une première électrode de l'élément capacitif et être reliée électriquement au circuit électronique par la première liaison électrique.

Une telle configuration permet d'avoir un élément capacitif dont la valeur peut être contrôlée avec une bonne sensibilité. De plus, la présence de matériau électriquement conducteur tel qu'un métal dans le ou les deuxièmes vias ou tranchées forme alors un écran vis-à-vis d'un rayonnement électromagnétique.

Une partie du substrat disposée contre la première couche diélectrique et en regard de la première couche électriquement conductrice peut former une deuxième électrode de l'élément capacitif.

La première couche diélectrique et la première couche électriquement conductrice peuvent remplir complètement les volumes formés par le premier via électriquement conducteur et/ou le deuxième via ou la tranchée. Dans cette configuration, et notamment lorsque la première couche diélectrique et la première couche électriquement conductrice remplissent complètement le volume formé par le ou les deuxièmes vias ou la ou les tranchées, on améliore la protection de la face arrière de la puce.

La puce électronique peut comporter en outre, au niveau de la face avant du substrat, une deuxième couche électriquement conductrice structurée formant une bobine couplée de manière inductive à au moins une partie de la première couche électriquement conductrice, la deuxième couche électriquement conductrice pouvant être reliée électriquement au circuit électronique qui est adapté à mesurer la valeur d'une inductance de la bobine. Une telle configuration permet de réaliser un contrôle supplémentaire de l'intégrité de la face arrière de la puce électronique via le contrôle de l'inductance de la bobine, et cela indépendamment du contrôle de la valeur de la capacité électrique de l'élément capacitif.

Dans ce cas, ladite partie de la première couche électriquement conductrice peut correspondre à celle se trouvant au niveau de la paroi de fond du deuxième via ou de la tranchée.

La première couche électriquement conductrice peut comporter un matériau non transparent vis-à-vis de longueurs d'ondes comprises entre environ 100 nm et 10 µm, c'est-à-dire allant de l'infrarouge à l'ultraviolet. Dans ce cas, la première couche électriquement conductrice peut servir alors à réfléchir, diffracter ou diffuser un rayonnement lumineux tel que des faisceaux laser atteignant la face arrière de la puce électronique.

L'élément capacitif peut comporter au moins :
- une première portion électriquement conductrice plane disposée au niveau de la face arrière du substrat, pouvant former une première électrode de l'élément capacitif et être reliée électriquement au circuit électronique ;
- une deuxième couche diélectrique recouvrant au moins la première portion électriquement conductrice plane ;
- une deuxième portion électriquement conductrice plane espacée de la première portion électriquement conductrice plane par la deuxième couche diélectrique, formant une deuxième électrode de l'élément capacitif et reliée électriquement au premier via électriquement conducteur.

Dans ce cas, la puce électronique peut comporter au moins une troisième portion électriquement conductrice plane espacée de la première portion électriquement conductrice plane par la deuxième couche diélectrique et reliée électriquement au circuit électronique au moins par le troisième via électriquement conducteur traversant le substrat, et la première portion électriquement conductrice plane et la troisième portion électriquement conductrice plane peuvent former respectivement une première électrode et une deuxième électrode d'un deuxième élément capacitif disposé au niveau de la face arrière du substrat et au moins en partie en regard du circuit électronique.

L'élément capacitif est dans ce cas formé par au moins deux capacités planes formées au niveau de la face arrière du substrat.

En variante, la première portion électriquement conductrice plane peut être en contact avec un matériau électriquement conducteur remplissant au moins le deuxième via ou la tranchée et peut être reliée électriquement au circuit électronique au moins par le troisième via électriquement conducteur traversant le substrat.

En variante, la première portion électriquement conductrice plane peut être reliée électriquement au circuit électronique par au moins une partie du substrat qui est électriquement conductrice ou semi-conductrice.

La puce électronique peut comporter plusieurs deuxièmes vias ou tranchées traversant la face arrière du substrat et une partie de l'épaisseur du substrat et de dimensions différentes. Cette configuration permet d'avoir un élément capacitif dont la capacité électrique est de valeur variable selon les dimensions des deuxièmes vias ou tranchées, et qui est donc difficilement reproductible.

L'épaisseur du substrat peut être comprise entre environ 200 µm et 700 µm, ce qui rend plus difficile l'attaque de la face avant de la puce électronique depuis sa face arrière.

L'invention concerne également un procédé de réalisation d'une puce électronique comportant au moins les étapes de :
- formation d'un circuit électronique au niveau d'une face avant d'un substrat ;
- réalisation d'au moins un élément capacitif au moins au niveau d'une face arrière du substrat et au moins en partie en regard du circuit électronique, et d'au moins une première et une deuxième liaisons électriques telles que la première liaison électrique comprenne au moins un premier via électriquement conducteur traversant le substrat et reliant électriquement l'élément capacitif au circuit électronique, le circuit électronique étant adapté à mesurer la valeur de la capacité électrique de l'élément capacitif entre la première et la deuxième liaisons électriques, et
- réalisation d'au moins un deuxième via ou une tranchée traversant la face arrière du substrat et une partie de l'épaisseur du substrat, et disposé en regard du circuit électronique tel qu'une paroi de fond du deuxième via ou de la tranchée soit espacée du circuit électronique d'une distance non nulle.

Le circuit électronique peut être réalisé directement sur le substrat ou être reporté sur le substrat.

Le procédé peut comporter la réalisation de plusieurs deuxièmes vias ou tranchées traversant la face arrière du substrat et une partie de l'épaisseur du substrat, les dimensions de chacun des deuxièmes vias ou tranchées étant choisies de manière aléatoire par rapport aux dimensions des autres deuxièmes vias ou tranchées. On rend ainsi encore plus difficile la reproduction de l'élément capacitif par rapport à un élément capacitif dont la capacité électrique a une valeur prédéfinie. La valeur de la capacité de l'élément capacitif peut dans ce cas être mesurée par exemple lors de la première mise sous tension de la puce électronique et être vérifiée par la suite lors de chaque activation de la puce.

Le procédé peut comporter la réalisation d'au moins un troisième via électriquement conducteur traversant le substrat et destiné à former au moins une partie de la deuxième liaison électrique.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la figure 1 représente une puce électronique, objet de la présente invention, selon un premier mode de réalisation ;
- les figures 2A à 2C représentent des étapes d'un procédé de réalisation de la puce électronique, objet de la présente invention, selon le premier mode de réalisation ;
- la figure 3 représente une puce électronique, objet de la présente invention, selon une variante du premier mode de réalisation ;
- la figure 4 représente une puce électronique, objet de la présente invention, selon un deuxième mode de réalisation ;
- la figure 5 représente une puce électronique, objet de la présente invention, selon un troisième mode de réalisation ;
- la figure 6 représente une puce électronique, objet de la présente invention, selon un quatrième mode de réalisation ;
- la figure 7 représente une puce électronique, objet de la présente invention, selon une variante du premier mode de réalisation.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

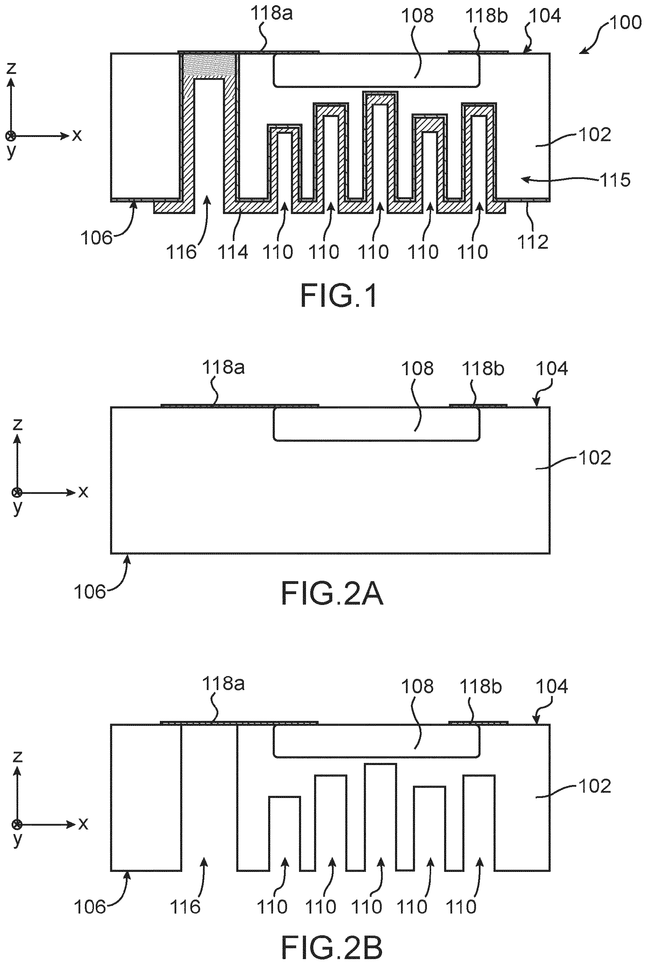

On se réfère tout d'abord à la figure 1 qui représente une puce électronique 100 selon un premier mode de réalisation dont la face arrière comporte des moyens de protection vis-à-vis d'attaques pouvant être mises en œuvre à l'encontre de cette puce.

La puce électronique 100 comporte un substrat 102, par exemple à base d'un matériau électriquement conducteur ou semi-conducteur tel que du silicium, et dont l'épaisseur est supérieure à environ 120 µm, et de préférence comprise entre environ 200 µm et 700 µm. Le substrat 102 comporte une première face principale appelée face avant 104, et une deuxième face principale appelée face arrière 106, opposée à la face avant 104. Les faces avant 104 et arrière 106 du substrat 102 sont assimilées aux faces avant et arrière de la puce électronique 100. La puce électronique 100 comporte également un circuit électronique 108, incluant notamment des transistors CMOS, réalisé au niveau de la face avant 104 du substrat 102 et dans lequel des données à protéger sont stockées.

La puce électronique 100 comporte également des moyens protégeant la face arrière de la puce électronique 100, et notamment le circuit électronique 108 depuis la face arrière 106. Dans ce premier mode de réalisation, ces moyens comportent plusieurs vias 110 non débouchant réalisés depuis la face arrière 106 du substrat 102 à travers une partie de l'épaisseur du substrat 102, en regard du circuit électronique 108.

Les vias 110 comportent des profondeurs (dimensions selon l'axe Z) et des dimensions dans un plan parallèle aux faces principales 104 et 106 du substrat 102 (plan (X,Y)), correspondant aux diamètres dans le cas de vias 110 de sections sensiblement circulaires, différentes les unes par rapport aux autres, et par exemple choisies de manière aléatoire lors de leur réalisation. Les profondeurs des vias 110 sont liées aux diamètres des vias 110, et sont choisies notamment en fonction de l'épaisseur du substrat 102 et de la profondeur atteinte par le circuit électronique 108 dans le substrat 102.

Les parois latérales et les parois de fond des vias 110 sont recouvertes par une couche diélectrique 112, comprenant par exemple un oxyde tel que du SiO₂, qui recouvre également la face arrière 106 du substrat 102. Une couche électriquement conductrice 114, correspondant par exemple à une couche métallique pouvant être réalisée à base de cuivre et/ou de tungstène, recouvre de manière continue la couche diélectrique 112 au niveau des parois latérales et des parois de fond des vias 110, ainsi qu'au niveau d'une partie de la face arrière 106 du substrat 102, notamment entre les vias 110.

Ainsi, la couche électriquement conductrice 114, la couche diélectrique 112 et une partie du substrat 102 qui est espacée de la couche électriquement conductrice 114 par la couche diélectrique 112 forment ensemble un élément capacitif 115 dont la valeur de la capacité électrique dépend notamment des dimensions (profondeurs et diamètres) des vias 110. Or, étant donné que les dimensions des vias 110 sont choisies de manière aléatoire, la valeur de cette capacité électrique est également aléatoire. La couche électriquement conductrice 114 forme la première électrode de cet élément capacitif 115. La partie du substrat 102 en contact avec la couche diélectrique 112 et se trouvant en regard de la couche électriquement conductrice 114 forme la deuxième électrode de cet élément capacitif 115. Ces deux électrodes sont isolées électriquement l'une de l'autre par la couche diélectrique 112, formant ainsi un élément capacitif.

Un via débouchant 116 est réalisé à travers toute l'épaisseur du substrat 102, à côté du circuit électronique 108. La couche diélectrique 112 et la couche électriquement conductrice 114 recouvrent les parois latérales du via 116, et la couche électriquement conductrice 114 se prolonge au niveau de la paroi de fond du via 116 (contrairement à la couche diélectrique 112 qui ne recouvre que les parois latérales du via 116 et non la paroi de fond du via 116), formant ainsi un accès électrique depuis la face avant 104 du substrat 102 à la première électrode de l'élément capacitif 115 présent en face arrière de la puce électronique 100. Un premier élément électriquement conducteur 118a formé sur la face avant 104 du substrat 102 relie électriquement le via conducteur 116 au circuit électronique 108. Un deuxième élément électriquement conducteur 118b est également formé sur la face avant 104 du substrat 102 et relie électriquement le substrat 102 au circuit électronique 108. Ainsi, le premier élément électriquement conducteur 118a et le via 116 forment une première liaison électrique entre la première électrode de l'élément capacitif 115 et le circuit électronique 108. De plus, le deuxième élément électriquement conducteur 118b et le substrat 102 (du fait que celui-ci comporte un matériau conducteur ou semi-conducteur permettant de reporter un potentiel électrique depuis la face arrière 106 du substrat 102 jusqu'à la face avant 104) forment une deuxième liaison électrique entre la deuxième électrode de l'élément capacitif 115 (formée par la partie du substrat 102 disposée contre la couche diélectrique 112 et en regard de la couche électriquement conductrice 114) au circuit électronique 108. La valeur de la capacité électrique de l'élément capacitif 115 peut donc être mesurée par le circuit électronique 108 grâce à ces deux liaisons électriques permettant au circuit électronique 108 de mesurer la tension, ou la différence de potentiels, entre les deux électrodes de l'élément capacitif 115.

Les moyens de protection décrits ci-dessus permettent de protéger la puce électronique 100 contre plusieurs types d'attaques.

Ils forment tout d'abord une protection vis-à-vis d'un amincissement (par exemple une planarisation mécano-chimique) qui serait réalisé au niveau de la face arrière de la puce électronique 100. En effet, un tel amincissement supprimerait les parties de la couche électriquement conductrice 114 se trouvant sur la face arrière 106 du substrat 102, provoquant alors une rupture du contact électrique entre les parties de la couche électriquement conductrice 114 se trouvant dans les vias 110 et le via conducteur 116, et donc entre l'élément capacitif 115 se trouvant sur la face arrière de la puce électronique 100 et le circuit électronique 108. Une mesure de la valeur de la capacité électrique de l'élément capacitif 115 par le circuit électronique 108 et une comparaison de la valeur mesurée par rapport à une valeur de référence (correspondant par exemple à une mesure de cette capacité lors d'une première utilisation de la puce électronique 100) permet donc de détecter si la puce électronique a subi un amincissement de sa face arrière. De plus, le caractère aléatoire de la valeur de cette capacité électrique formée au niveau de la face arrière de la puce électronique 100 lorsque les dimensions des vias 110 sont choisies de manière aléatoire contribue également à cette protection du fait qu'il est alors impossible de simuler la présence de cette capacité si celle-ci est détruite, du fait que sa valeur est inconnue.

Ces moyens forment également une protection vis-à-vis des attaques par laser et/ou électromagnétiques car la matrice de vias 110 dont les parois sont recouvertes par la couche électriquement conductrice 114, qui est avantageusement réalisée avec un métal non transparent, peut servir à réfléchir, diffracter ou diffuser des faisceaux lumineux, par exemple laser, ou des rayonnements électromagnétiques.

Lorsque la puce électronique 100 est destinée à être protégée vis-à-vis de telles attaques par laser, les dimensions des vias 110 sont avantageusement inférieures à la longueur d'onde des faisceaux lumineux laser destinés à être bloqués.

La présence des vias 110 au niveau de la face arrière de la puce électronique 100 permet également de protéger la puce électronique 100 vis-à-vis des attaques chimiques. En effet, contrairement à la face arrière 106 du substrat 102, les parois de fond des vias 110 sont proches du circuit électronique 108, par exemple telles que la distance séparant le circuit électronique 108 de la ou des parois de fond d'un ou plusieurs des vias 110 soit inférieure ou égale à environ 20 µm, ou par exemple comprise entre environ 10 et 20 µm. Ainsi, une attaque chimique, par exemple avec une solution d'acide fluorhydrique et d'acide nitrique ou d'hydroxyde de potassium, dans le but de graver le substrat 102 depuis sa face arrière 106 aura pour conséquence une destruction prématurée du circuit électronique 108 par la face arrière en raison de la ou des solutions chimiques qui attaqueront les parois de fond des vias 110 et atteindront rapidement le circuit électronique 108.

Les couches ou matériaux déposés dans le fond des vias 110 peuvent être suffisamment minces pour ne pas altérer la protection de la puce électronique 100 vis-à-vis d'attaques chimiques. Ainsi, la couche diélectrique 112 a par exemple une épaisseur comprise entre environ 200 nm et 500 nm et la couche électriquement conductrice 114 a par exemple une épaisseur comprise entre environ 200 nm et 2000 nm. De plus, étant donné les techniques de dépôt mises en œuvre pour former ces couches, par exemple des dépôts de type PVD ou PECVD classiques, les couches déposées seront d'autant plus fine que les vias 110 sont profonds, et donc proches du composant à protéger. Les épaisseurs de matériaux mises en jeu des les vias 110 peuvent être négligeables par rapport à l'agressivité des attaques chimiques (acide, basique, etc.). Les vias 110 peuvent être partiellement remplis par ces couches ou matériaux. Lors d'une attaque chimique, les matériaux disposés dans les vias 110 peuvent être plus rapidement consommés que le matériau du substrat 102.

On décrit maintenant en liaison avec les figures 2A à 2C des étapes d'un procédé de réalisation de la puce électronique 100 précédemment décrite en liaison avec la figure 1. Bien que ce procédé soit ici décrit comme réalisant une seule puce électronique 100, ce procédé est avantageusement mis en œuvre pour réaliser plusieurs puces électroniques de manière collective directement à partir d'un unique wafer, ou substrat.

Comme représenté sur la figure 2A, le circuit électronique 108 et les éléments électriquement conducteurs 118a, 118b sont réalisés au niveau de la face avant 104 du substrat 102. Un amincissement du substrat 102 depuis sa face arrière 106 est éventuellement mis en œuvre si l'épaisseur initiale du substrat 102 est supérieure à celle souhaitée.

Les vias 110 et le via 116 sont ensuite définis par lithographie et sont gravés, par exemple via la mise en œuvre d'une gravure profonde de type DRIE (gravure ionique réactive profonde), comme représenté sur la figure 2B.

Etant donné que la profondeur de gravure de chaque via est dépendante du diamètre du via gravé, il est possible de définir à travers la face arrière 106 du substrat 102 une matrice de vias 110 de dimensions aléatoires et obtenir ainsi des vias 110 de différentes profondeurs. Les dimensions des vias 110 sont toutefois choisies telles que ces vias 110, disposés en regard du circuit électronique 108, n'atteignent pas le circuit électronique 108 à travers le substrat 102. Il est notamment possible de combiner des vias 110 de grandes dimensions dont les parois de fond sont très proches du circuit électronique 108, et donc formant une protection très efficace vis-à-vis d'éventuelles attaques chimiques de la face arrière de la puce électronique 100, avec des vias de plus petites dimensions qui permettent de réaliser une protection efficace vis-à-vis d'attaques par faisceau laser.

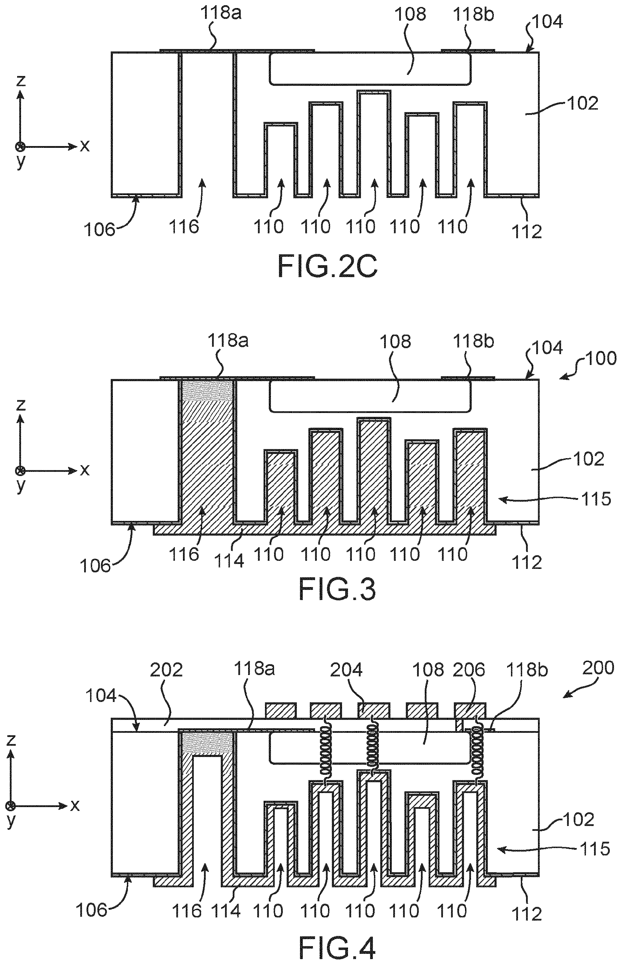

Comme représenté sur la figure 2C, la couche diélectrique 112 est ensuite formée sur les parois latérales des vias 110 et du via 116, sur les parois de fond des vias 110 et sur les parties non gravées de la face arrière 106 du substrat 102. Cette couche diélectrique 112 est par exemple obtenue par la mise en œuvre d'un dépôt d'oxyde ou de nitrure du silicium (par exemple de type PECVD) sur les parties du substrat 102 formant les parois des vias 110 et 116 et la face arrière 106 du substrat 102. La partie de la couche diélectrique 112 se trouvant au fond du via 116 est gravée, par exemple via une lithographie ou non, afin que la partie de la couche électriquement conductrice 114 qui sera formée ultérieurement dans le via 116 puisse être en contact électriquement avec le premier élément électriquement conducteur 118a.

Le procédé est achevé en formant la couche électriquement conductrice 114 au niveau de la face arrière de la puce électronique 100 de manière à recouvrir la couche diélectrique 112 au niveau des parois des vias 110 et 116, d'une partie des portions non gravées de la face arrière 106 du substrat 102, et en recouvrant également la paroi de fond du via 116 afin d'être en contact électriquement avec le premier élément électriquement conducteur 118a. La couche électriquement conductrice 114 est par exemple réalisée par dépôt puis gravure. La puce électronique 100 précédemment décrite en liaison avec la figure 1 est ainsi obtenue.

Suivant le ou les types d'attaques contre lesquelles la puce électronique 100 est destinée à être protégée, différentes configurations des moyens de protection peuvent être envisagées. Par exemple, dans le cas où la puce électronique 100 est destinée à être protégée uniquement contre des attaques chimiques, un ou plusieurs vias 110 peuvent être réalisés au niveau de la face arrière 106 du substrat 102 en regard du circuit électronique 108, sans avoir à remplir ce ou ces vias 110 avec la couche électriquement conductrice 114 ni à établir de liaison électrique avec le circuit électronique 108. Dans le cas où la puce électronique 100 est destinée à être protégée en outre contre des attaques par laser et/ou de type électromagnétique, les moyens de protection peuvent dans ce cas correspondre aux vias 110 réalisés au niveau de la face arrière 106 du substrat 102 en regard du circuit électronique 108 et dont les parois sont recouvertes avec la couche diélectrique 112 et la couche électriquement conductrice 114, sans toutefois nécessiter de liaison électrique avec le circuit électronique 108 du fait que ces couches servent à former un écran vis-à-vis des rayonnements reçus.

Dans le premier mode de réalisation précédemment décrit, l'épaisseur de la couche électriquement conductrice 114 est telle que les vias 110 et 116 ne sont pas complètement bouchés. En variante du premier mode de réalisation précédemment décrit en liaison avec la figure 1, il est possible que l'épaisseur de la couche électriquement conductrice 114 soit telle qu'elle remplisse totalement les vias 110 et 116, comme représenté sur la figure 3. Cette variante permet notamment d'augmenter la solidité de la puce électronique 100 lors de ses manipulations.

La figure 4 représente une puce électronique 200 selon un deuxième mode de réalisation.

Comme la puce électronique 100 précédemment décrite, la puce électronique 200 comporte le substrat 102, le circuit électronique 108, les vias 110 dont les parois sont recouvertes par la couche diélectrique 112 et la couche électriquement conductrice 114, le via conducteur 116 et les éléments électriquement conducteurs 118a et 118b. La puce électronique 200 comporte également sur la face avant 104 du substrat 102 une autre couche diélectrique 202 sur laquelle est réalisée une autre couche électriquement conductrice structurée 204, correspondant par exemple à une couche métallique, formant une bobine permettant d'avoir un couplage inductif avec les parties de la couche électriquement conductrice 114 se trouvant dans les vias 110 les plus profonds. Sur la figure 4, ce couplage est représenté symboliquement par des selfs entre l'autre couche électriquement conductrice structurée 204 et des parties de la couche électriquement conductrice 114 se trouvant dans le fond des vias 110. Un tel couplage inductif se produit notamment lorsque la distance entre les parties de la couche électriquement conductrice 114 se trouvant dans le fond des vias 110 et l'autre couche électriquement conductrice structurée 204 est égale ou inférieure à environ le diamètre de la bobine. Etant donné la nature aléatoire de la profondeur des vias 110 réalisés, le couplage inductif obtenu est donc localisé et aléatoire. Ce deuxième mode de réalisation permet donc de réaliser un contrôle de l'intégrité de la face arrière de la puce électronique 200 non seulement grâce au contrôle de la capacité électrique de l'élément capacitif 115 formée en face arrière de la puce 200 mais également grâce au contrôle de la valeur du couplage inductif entre la bobine formée par l'autre couche électriquement conductrice structurée 204 et les vias 110, cette mesure étant réalisée par le circuit électronique 108 (l'autre couche électriquement conductrice structurée 204 est reliée électriquement au circuit électronique 108 par au moins un élément de liaison électrique 206 traversant la couche diélectrique 202).

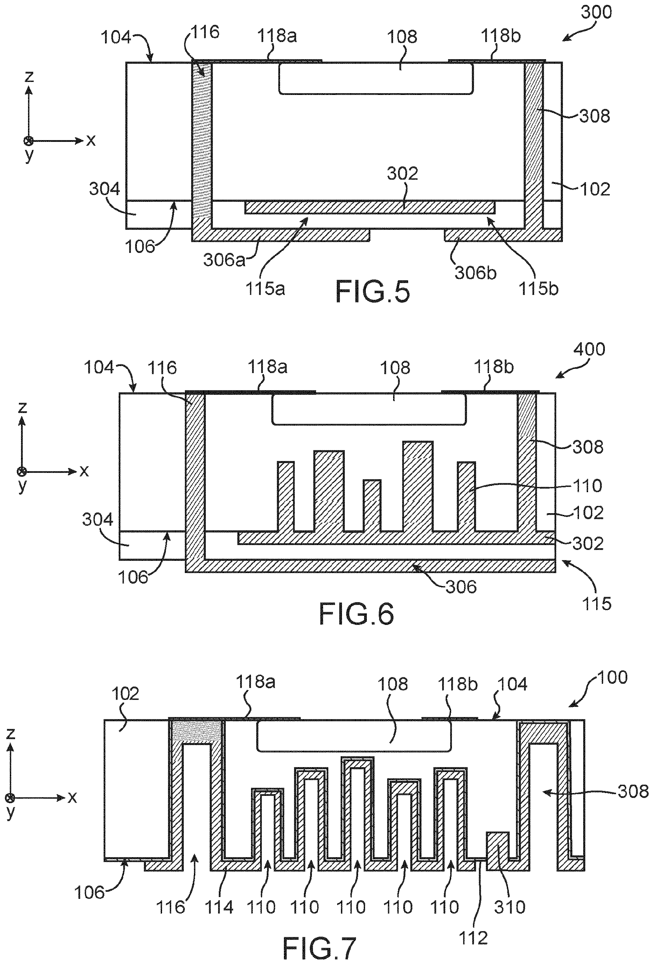

La figure 5 représente une puce électronique 300 selon un troisième mode de réalisation.

Comme les puces électroniques 100 et 200 précédemment décrites, la puce électronique 300 comporte le substrat 102, le circuit électronique 108, le via conducteur 116 et les éléments électriquement conducteurs 118a et 118b. Toutefois, dans cette puce électronique 300, les moyens de protection de la face arrière de la puce diffèrent de ceux des puces électroniques 100 et 200. Dans ce troisième mode de réalisation, en regard du circuit électronique 108, la face arrière 106 du substrat 102 est recouverte d'une première portion électriquement conductrice plane 302, correspondant ici à une portion métallique plane. La première portion électriquement conductrice plane 302 est reliée électriquement au circuit électronique 108 par l'intermédiaire du substrat 102 (du fait que celui-ci comporte un matériau conducteur ou semi-conducteur permettant de reporter un potentiel électrique depuis la face arrière du substrat 102 jusqu'au circuit électronique 108). La première portion électriquement conductrice plane 302 est recouverte par une autre couche diélectrique 304 par exemple à base d'un matériau stable en température tel que du SiO₂. Sur l'exemple de la figure 5, cette couche diélectrique 304 recouvre également les parties de la face arrière 106 du substrat 102 qui ne sont pas recouvertes par la première portion électriquement conductrice plane 302.

Une deuxième portion électriquement conductrice plane 306a et une troisième portion électriquement conductrice plane 306b, correspondant toutes les deux à des portions métalliques planes, sont disposées contre la couche diélectrique 304, chacune au moins en partie en regard de la première portion électriquement conductrice plane 302, dont l'une (306a) est relié électriquement au circuit électronique 108 par la liaison électrique formée par le via conducteur 116 et le premier élément électriquement conducteur 118a, et dont l'autre (306b) est reliée électriquement au circuit électronique 108 par la liaison électrique formée par un autre via conducteur 308, réalisé à travers le substrat 102 et la couche diélectrique 304, et le deuxième élément électriquement conducteur 118b. Bien que non visible sur la figure 5, les parois latérales des vias 108 et 308 sont recouvertes d'un matériau diélectrique permettant d'éviter un contact électrique entre le substrat 102 et les matériaux électriquement conducteurs remplissant les vias 108 et 308.

Dans ce troisième mode de réalisation, l'intégrité de la face arrière de la puce électronique 300 est donc contrôlée via le contrôle de la valeur de la capacité d'un premier élément capacitif plan 115a formé par la première portion électriquement conductrice plane 302, correspondant à la première électrode de ce premier élément capacitif 115a, et la deuxième portion électriquement conductrice plane 306a, correspondant à la deuxième électrode de ce premier élément capacitif 115a, espacées l'une de l'autre par la couche diélectrique 304, et le contrôle de la valeur de la capacité d'un deuxième élément capacitif plan 115b formé par la première portion électriquement conductrice plane 302, correspondant à la première électrode de ce deuxième élément capacitif, et la troisième portion électriquement conductrice plane 306b, correspondant à la deuxième électrode de ce deuxième élément capacitif 115b, espacées l'une de l'autre par la couche diélectrique 304. Un nombre plus important d'éléments capacitifs plans peuvent être réalisés au niveau de la face arrière de la puce électronique 300. Chacun des éléments capacitifs formés au niveau de la face arrière de la puce électronique 300 est relié au circuit électronique 108 par au moins un via conducteur ce qui permet de réaliser un maillage fin de capacités électriques couvrant toute la face arrière de la puce électronique 300. De tels moyens de protection assurent une détection électrique de l'attaque d'un ou plusieurs des éléments capacitifs en face arrière de la puce (via la mesure des valeurs des capacités de ces éléments comme précédemment décrit pour les puces électroniques 100 et 200) et permettent également de former un écran vis-à-vis d'attaques électromagnétiques.

En variante, il est possible de ne pas réaliser la première portion 302 et d'avoir la première électrode du premier élément capacitif 115a et la première électrode du deuxième élément capacitif 115b qui soient formées par le substrat 102, comme dans le premier mode de réalisation précédemment décrit.

Dans le troisième mode de réalisation décrit ci-dessus, les portions électriquement conductrices planes 302, 306a et 306b ont chacune une section, dans un plan parallèle aux faces avant 104 et arrière 106 du substrat 102 (parallèle au plan (X,Y)) de forme sensiblement rectangulaire, ou plus généralement ont des surfaces pleines. En variante, les sections d'une ou plusieurs de ces portions électriquement conductrices formant les éléments capacitifs en face arrière de la puce électronique 300 peuvent être de forme différente, par exemple sous la forme d'un réseau de serpentins, et former ainsi des pistes électriquement conductrices, ce qui permet de maximiser les variations de la valeur de la capacité électrique en cas de modification de ces capacités, et donc d'avoir une meilleur sensibilité de détection en cas d'attaque de la face arrière de la puce électronique 300.

La figure 6 représente une puce électronique 400 selon un quatrième mode de réalisation.

Comme dans le troisième mode de réalisation, les moyens de protection de la face arrière de la puce électronique 400 se basent sur la mesure de la capacité électrique d'un élément capacitif 115 formé au niveau la face arrière 106 du substrat 102, entre une première portion électriquement conductrice plane 302 et une deuxième portion électriquement conductrice plane 306 séparées l'une de l'autre par la couche diélectrique 304. La première portion électriquement conductrice plane 302 est reliée aux vias 110 remplis de matériau électriquement conducteur, par exemple métallique, et dont les dimensions varient les unes par rapport aux autres et sont aléatoires. Le via conducteur 308 relie ici la première portion électriquement conductrice plane 302 au deuxième élément électriquement conducteur 118b lui-même relié au circuit électronique 108. Ainsi, outre la protection obtenue par la surveillance de variation de la valeur de la capacité électrique formée entre les portions électriquement conductrices 302 (couplée aux vias 110) et 306, la présence des vias 110 permet de contrer les attaques par faisceau laser réalisées au niveau de la face arrière de la puce électronique 400.

La figure 7 représente la puce électronique 100 selon une variante du premier mode de réalisation.

Par rapport à la puce électronique 100 précédemment décrite en liaison avec la figure 1, la deuxième liaison électrique reliant électriquement la deuxième électrode de l'élément capacitif 115 (formée par la partie du substrat 102 en contact avec la couche diélectrique 112 et se trouvant en regard de la couche électriquement conductrice 114) au circuit électronique 108 est ici réalisée par un deuxième via 308 relié électriquement au deuxième élément électriquement conducteur 118b et à une zone de reprise de contact électrique 310 se trouvant au niveau de la face arrière 106 du substrat 102 et qui est en contact avec la partie du substrat 102 formant la deuxième électrode de l'élément capacitif 115. Une telle deuxième liaison électrique améliore la mesure de la valeur de la capacité de l'élément capacitif 115, notamment lorsque le substrat 102 est à base de semi-conducteur car le report du potentiel électrique de la deuxième électrode réalisé par ce deuxième via 308 est meilleur que celui réalisé par le substrat 102. De plus, une telle configuration permet une reprise de contact au substrat de n'importe quel type de circuit électronique 108, que celui-ci soit doté d'élément de contact électrique en face avant ou non. Enfin, une telle deuxième liaison électrique peut également être utilisée lorsque le substrat 102 n'est pas homogène, c'est-à-dire lorsqu'il n'est pas formé uniquement d'un matériau électriquement conducteur ou semi-conducteur, par exemple dans le cas d'un substrat SOI. Cette variante peut également s'appliquer aux puces précédemment décrites en liaison avec les figures 3 et 4.

En variante des différents modes de réalisation précédemment décrits, il est possible que les vias 110 aient des sections, dans un plan parallèle aux faces avant 104 et arrière 106 du substrat 102, de forme quelconque (rectangulaire, triangulaire, etc.) ou que ces vias 110 soient partiellement ou totalement remplacés par des tranchées, de forme rectiligne ou non, dont les parois latérales et les parois de fond sont recouvertes ou non par la couche diélectrique 112 et la couche électriquement conductrice 114, ou complètement remplis de matériau électriquement conducteur. Sur les figures 1 à 4 et 6, les références 110 peuvent dans ce cas désigner les tranchées qui sont vues en coupe de profil sur ces figures.

La protection de la face arrière des puces électroniques 100 - 400 précédemment décrites est compatible avec les protections connues en face avant de puces électroniques (écrans métalliques actifs par exemple), les moyens de protection de la face arrière des puces électroniques 100 - 400 précédemment décrits pouvant se combiner à de telles protection en face avant des puces électroniques 100 - 400.

## Revendications

1. Puce électronique (100 - 400) comportant au moins :
- un circuit électronique (108) disposé au niveau d'une face avant (104) d'un substrat (102) ;
- au moins un élément capacitif (115, 115a, 115b) disposé au moins au niveau d'une face arrière (106) du substrat (102) et au moins en partie en regard du circuit électronique (108), et relié électriquement au circuit électronique (108) par au moins une première (116, 118a) et une deuxième (102, 118b, 308) liaisons électriques, la première liaison électrique (116, 118a) comprenant au moins un premier via électriquement conducteur (116) traversant le substrat (102), le circuit électronique (108) étant adapté à mesurer la valeur de la capacité électrique de l'élément capacitif (115, 115a, 115b) entre la première (116, 118a) et la deuxième (102, 118b, 308) liaisons électriques, et
- au moins un deuxième via ou une tranchée (110) traversant la face arrière (106) du substrat (102) et une partie de l'épaisseur du substrat (102), et disposé en regard du circuit électronique (108) tel qu'une paroi de fond du deuxième via ou de la tranchée (110) soit espacée du circuit électronique (108) d'une distance non nulle.

2. Puce électronique (100 - 400) selon la revendication 1, dans laquelle la deuxième liaison électrique (102, 118b, 308) comporte au moins un troisième via électriquement conducteur (308) traversant le substrat (102) ou comporte au moins une partie du substrat (102) qui est électriquement conductrice ou semi-conductrice.

3. Puce électronique (100, 200, 400) selon l'une des revendications précédentes, dans laquelle la distance entre la paroi de fond du deuxième via ou de la tranchée (110) et le circuit électronique (108) est inférieure ou égale à environ 20 µm.

4. Puce électronique (100, 200) selon l'une des revendications précédentes, comportant au moins :
- une première couche diélectrique (112) recouvrant des parois latérales du premier via électriquement conducteur (116), des parois latérales et la paroi de fond du deuxième via ou de la tranchée (110), et la face arrière (106) du substrat (102),
- une première couche électriquement conductrice (114) continue recouvrant la première couche diélectrique (112) au niveau des parois latérales du premier via électriquement conducteur (116), des parois latérales et de la paroi de fond du deuxième via ou de la tranchée (110), et d'au moins une partie de la face arrière (106) du substrat (102), et recouvrant en outre une paroi de fond du premier via électriquement conducteur (116),
dans laquelle la première couche électriquement conductrice (114) forme une première électrode de l'élément capacitif (115) et est reliée électriquement au circuit électronique (108) par la première liaison électrique (116, 118a).

5. Puce électronique (100, 200) selon la revendication 4, dans laquelle une partie du substrat (102) disposée contre la première couche diélectrique (112) et en regard de la première couche électriquement conductrice (114) forme une deuxième électrode de l'élément capacitif (115).

6. Puce électronique (100) selon l'une des revendications 4 ou 5, dans laquelle la première couche diélectrique (112) et la première couche électriquement conductrice (114) remplissent complètement les volumes formés par le premier via électriquement conducteur (116) et/ou le deuxième via ou la tranchée (110).

7. Puce électronique (200) selon l'une des revendications 4 à 6, comportant en outre, au niveau de la face avant (104) du substrat (102), une deuxième couche électriquement conductrice structurée (204) formant une bobine couplée de manière inductive à au moins une partie de la première couche électriquement conductrice (114), la deuxième couche électriquement conductrice (204) étant reliée électriquement au circuit électronique (108) qui est adapté à mesurer la valeur d'une inductance de la bobine.

8. Puce électronique (200) selon la revendication 7, dans laquelle ladite partie de la première couche électriquement conductrice (114) correspond à celle se trouvant au niveau de la paroi de fond du deuxième via ou de la tranchée (110).

9. Puce électronique (100, 200) selon l'une des revendications 4 à 8, dans laquelle la première couche électriquement conductrice (114) comporte un matériau non transparent vis-à-vis de longueurs d'ondes comprises entre environ 100 nm et 10 µm.

10. Puce électronique (300, 400) selon l'une des revendications 1 à 3, dans laquelle l'élément capacitif (115, 115a) comporte au moins :
- une première portion électriquement conductrice plane (302) disposée au niveau de la face arrière (106) du substrat (102), formant une première électrode de l'élément capacitif (115, 115a) et reliée électriquement au circuit électronique (108) ;
- une deuxième couche diélectrique (304) recouvrant au moins la première portion électriquement conductrice plane (302) ;
- une deuxième portion électriquement conductrice plane (306, 306a) espacée de la première portion électriquement conductrice plane (302) par la deuxième couche diélectrique (304), formant une deuxième électrode de l'élément capacitif (115, 115a) et reliée électriquement au premier via électriquement conducteur (116).

11. Puce électronique (300) selon les revendications 2 et 10, comportant au moins une troisième portion électriquement conductrice plane (306b) espacée de la première portion électriquement conductrice plane (302) par la deuxième couche diélectrique (304) et reliée électriquement au circuit électronique (108) au moins par le troisième via électriquement conducteur (308) traversant le substrat (102), et dans laquelle la première portion électriquement conductrice plane (302) et la troisième portion électriquement conductrice plane (306b) forment respectivement une première électrode et une deuxième électrode d'un deuxième élément capacitif (115b) disposé au niveau de la face arrière (106) du substrat (102) et au moins en partie en regard du circuit électronique (108).

12. Puce électronique (400) selon les revendications 2 et 10, dans laquelle la première portion électriquement conductrice plane (302) est en contact avec un matériau électriquement conducteur remplissant au moins le deuxième via ou la tranchée (110) et est reliée électriquement au circuit électronique (108) au moins par le troisième via électriquement conducteur (308) traversant le substrat (102).

13. Puce électronique (300, 400) selon la revendication 2 et l'une des revendications 10 ou 11, dans laquelle la première portion électriquement conductrice plane (302) est reliée électriquement au circuit électronique (108) par au moins une partie du substrat (102) qui est électriquement conductrice ou semi-conductrice.

14. Puce électronique (100, 200, 400) selon l'une des revendications précédentes, comportant plusieurs deuxièmes vias ou tranchées (110) traversant la face arrière (106) du substrat (102) et une partie de l'épaisseur du substrat (102) et de dimensions différentes.

15. Procédé de réalisation d'une puce électronique (100 - 400) comportant au moins les étapes de :
- formation d'un circuit électronique (108) au niveau d'une face avant (106) d'un substrat (102) ;
- réalisation d'au moins un élément capacitif (115, 115a, 115b) au moins au niveau d'une face arrière (106) du substrat (102) et au moins en partie en regard du circuit électronique (108), et d'au moins une première (116, 118a) et une deuxième (102, 118b, 308) liaisons électriques telles que la première liaison électrique (116, 118b) comprenne au moins un premier via électriquement conducteur (116) traversant le substrat (102) et reliant électriquement l'élément capacitif (115, 115a, 115b) au circuit électronique (108), le circuit électronique (108) étant adapté à mesurer la valeur de la capacité électrique de l'élément capacitif (115, 115a, 115b) entre la première (116, 118a) et la deuxième (102, 118b, 308) liaisons électriques, et
- réalisation d'au moins un deuxième via ou une tranchée (110) traversant la face arrière (106) du substrat (102) et une partie de l'épaisseur du substrat (102), et disposé en regard du circuit électronique (108) tel qu'une paroi de fond du deuxième via ou de la tranchée (110) soit espacée du circuit électronique (108) d'une distance non nulle.

16. Procédé selon la revendication 15, comportant la réalisation de plusieurs deuxièmes vias ou tranchées (110) traversant la face arrière (106) du substrat (102) et une partie de l'épaisseur du substrat (102), les dimensions de chacun des deuxièmes vias ou tranchées (110) étant choisies de manière aléatoire par rapport aux dimensions des autres deuxièmes vias ou tranchées (110).

17. Procédé selon l'une des revendications 15 ou 16, comportant la réalisation d'au moins un troisième via électriquement conducteur (302) traversant le substrat (102) et destiné à former au moins une partie de la deuxième liaison électrique (102, 118b, 308).

## Patentansprüche

1. Elektronischer Chip (100 - 400), zumindest enthaltend:
- eine elektronische Schaltung (108), die im Bereich einer Vorderseite (104) eines Substrats (102) angeordnet ist;
- zumindest ein kapazitives Element (115, 115a, 115b), das zumindest im Bereich einer Rückseite (106) des Substrats (102) angeordnet ist und zumindest teilweise der elektronischen Schaltung (108) gegenüberliegt und mit der elektronischen Schaltung (108) über zumindest eine erste (116, 118a) und eine zweite (102, 118b, 308) elektrische Verbindung elektrisch verbunden ist, wobei die erste elektrische Verbindung (116, 118a) zumindest eine erste elektrisch leitende Durchkontaktierung (116) durch das Substrat (102) hindurch enthält, wobei die elektronische Schaltung (108) dazu ausgelegt ist, den Wert der elektrischen Kapazität des kapazitiven Elements (115, 115a, 115b) zwischen der ersten (116, 118a) und der zweiten (102, 118b, 308) elektrischen Verbindung zu messen,
- zumindest eine zweite Durchkontaktierung bzw. einen Graben (110) durch die Rückseite (106) des Substrats (102) und durch einen Teil der Dicke des Substrats (102) hindurch, die bzw. der der elektronischen Schaltung (108) gegenüberliegend so angeordnet ist, dass eine Bodenwand der zweiten Durchkontaktierung bzw. des Grabens (110) von der elektronischen Schaltung (108) mit einem Abstand ungleich Null entfernt ist.

2. Elektronsicher Chip (100 - 400) nach Anspruch 1,
wobei die zweite elektrische Verbindung (102, 118b, 308) zumindest eine dritte elektrisch leitende Durchkontaktierung (308) durch das Substrat (102) hindurch enthält oder zumindest einen Teil des Substrats (102) umfasst, der elektrisch leitend oder halbleitend ist.

3. Elektronischer Chip (100, 200, 400) nach einem der vorangehenden Ansprüche,
wobei der Abstand zwischen der Bodenwand der zweiten Durchkontaktierung bzw. des Grabens (110) und der elektronischen Schaltung (108) kleiner oder gleich ca. 20 µm ist.

4. Elektronischer Chip (100, 200) nach einem der vorangehenden Ansprüche, zumindest enthaltend:
- eine erste dielektrische Schicht (112), die Seitenwände der ersten elektrisch leitenden Durchkontaktierung (116), Seitenwände und die Bodenwand der zweiten Durchkontaktierung bzw. des Grabens (110) und die Rückseite (106) des Substrats (102) überdeckt,
- eine erste elektrisch leitende, durchgehende Schicht (114), die die erste dielektrische Schicht (112) im Bereich der Seitenwände der ersten elektrisch leitenden Durchkontaktierung (116), der Seitenwände und der Bodenwand der zweiten Durchkontaktierung bzw. des Grabens (110) und zumindest eines Teils der Rückseite (106) des Substrats (102) und ferner eine Bodenwand der ersten elektrisch leitenden Durchkontaktierung (116) überdeckt,
wobei die erste elektrisch leitende Schicht (114) eine erste Elektrode des kapazitiven Elements (115) bildet und über die erste elektrische Verbindung (116, 118a) elektrisch mit der elektronischen Schaltung (108) verbunden ist.

5. Elektronischer Chip (100, 200) nach Anspruch 4,
wobei ein Teil des Substrats (102), der an der ersten dielektrischen Schicht (112) und der ersten elektrisch leitenden Schicht (114) gegenüberliegend angeordnet ist, eine zweite Elektrode des kapazitiven Elements (115) bildet.

6. Elektronischer Chip (100) nach einem der Ansprüche 4 oder 5,
wobei die erste dielektrische Schicht (112) und die erste elektrisch leitende Schicht (114) die von der ersten elektrisch leitenden Durchkontaktierung (116) und/oder der zweiten Durchkontaktierung bzw. dem Graben (110) gebildeten Räume vollständig ausfüllen.

7. Elektronischer Chip (200) nach einem der Ansprüche 4 bis 6,
ferner enthaltend im Bereich der Vorderseite (104) des Substrats (102) eine strukturierte zweite elektrisch leitende Schicht (204), die eine Spule bildet, welche induktiv mit zumindest einem Teil der ersten elektrisch leitenden Schicht (114) gekoppelt ist, wobei die zweite elektrisch leitende Schicht (204) elektrisch mit der elektronischen Schaltung (108) verbunden ist, die dazu ausgelegt ist, den Wert einer Induktivität der Spule zu messen.

8. Elektronischer Chip (200) nach Anspruch 7,
wobei der genannte Teil der ersten elektrisch leitenden Schicht (114) demjenigen entspricht, der sich im Bereich der Bodenwand der zweiten Durchkontaktierung bzw. des Grabens (110) befindet.

9. Elektronischer Chip (100, 200) nach einem der Ansprüche 4 bis 8,
wobei die erste elektrisch leitende Schicht (114) ein gegenüber Wellenlängen zwischen 100 nm und 10 µm nicht transparentes Material enthält.

10. Elektronischer Chip (300, 400) nach einem der Ansprüche 1 bis 3,
wobei das kapazitive Element (115, 115a) zumindest enthält:
- einen ersten flachen, elektrisch leitenden Abschnitt (302), der im Bereich der Rückseite (106) des Substrats (102) angeordnet ist, eine erste Elektrode des kapazitiven Elements (115, 115a) bildet und elektrisch mit der elektronischen Schaltung (108) verbunden ist;
- eine zweite dielektrische Schicht (304), die zumindest den ersten flachen, elektrisch leitenden Abschnitt (302) überdeckt;
- einen zweiten flachen, elektrisch leitenden Abschnitt (306, 306a), der von dem ersten flachen, elektrisch leitenden Abschnitt (302) durch die zweite dielektrische Schicht (304) beabstandet ist, eine zweite Elektrode des kapazitiven Elements (115, 115a) bildet und elektrisch mit der ersten elektrisch leitenden Durchkontaktierung (116) verbunden ist.

11. Elektronischer Chip (300) nach den Ansprüchen 2 und 10, enthaltend zumindest einen dritten flachen, elektrisch leitenden Abschnitt (306b), der von dem ersten flachen, elektrisch leitenden Abschnitt (302) durch die zweite dielektrische Schicht (304) beabstandet und elektrisch mit der elektronischen Schaltung (108) zumindest über die dritte elektrisch leitende Durchkontaktierung (308) verbunden ist, welche durch das Substrat (102) tritt, und wobei der erste flache, elektrisch leitende Abschnitt (302) und der dritte flache, elektrisch leitende Abschnitt (306b) jeweils eine erste Elektrode bzw. eine zweite Elektrode eines zweiten kapazitiven Elements (115b) bilden, das im Bereich der Rückseite (106) des Substrats (102) und zumindest teilweise der elektronischen Schaltung (108) gegenüberliegend angeordnet ist.

12. Elektronischer Chip (400) nach den Ansprüchen 2 und 10,
wobei der erste flache, elektrisch leitende Abschnitt (302) mit einem elektrisch leitenden Material in Kontakt steht, das zumindest die zweite Durchkontaktierung bzw. den Graben (110) ausfüllt und elektrisch mit der elektronischen Schaltung (108) zumindest über die dritte elektrisch leitende Durchkontaktierung (308) verbunden ist, die durch das Substrat (102) tritt.

13. Elektronischer Chip (300, 400) nach Anspruch 2 und nach einem der Ansprüche 10 oder 11,
wobei der erste flache, elektrisch leitende Abschnitt (302) elektrisch mit der elektronischen Schaltung (108) zumindest über einen Teil des Substrats (102) verbunden ist, der elektrisch leitend oder halbleitend ist.

14. Elektronischer Chip (100, 200, 400) nach einem der vorangehenden Ansprüche, enthaltend mehrere zweite Durchkontaktierungen bzw. Gräben (110), die durch die Rückseite (106) des Substrats (102) und durch einen Teil der Dicke des Substrats (102) hindurchtreten und unterschiedliche Abmessungen haben.

15. Verfahren zum Herstellen eines elektronischen Chips (100 - 400), umfassend zumindest die Schritte:
- Ausbilden einer elektronischen Schaltung (108) im Bereich einer Vorderseite (106) eines Substrats (102);
- Ausbilden von zumindest einem kapazitiven Element (115, 115a, 115b) zumindest im Bereich einer Rückseite (106) des Substrats (102) und zumindest teilweise der elektronischen Schaltung (108) gegenüberliegend, und von zumindest einer ersten (116, 118a) und einer zweiten (102, 118b, 308) elektrischen Verbindung, derart, dass die erste elektrische Verbindung (116, 118b) zumindest eine erste elektrisch leitende Durchkontaktierung (116) enthält, die durch das Substrat (102) tritt und das kapazitive Element (115, 115a, 115b) elektrisch mit der elektronischen Schaltung (108) verbindet, wobei die elektronische Schaltung (108) dazu ausgelegt ist, den Wert der elektrischen Kapazität des kapazitiven Elements (115, 115a, 115b) zwischen der ersten (116, 118a) und der zweiten (102, 118b, 308) elektrischen Verbindung zu messen, und
- Ausbilden von zumindest einer zweiten Durchkontaktierung bzw. eines Graben (110) durch die Rückseite (106) des Substrats (102) und durch einen Teil der Dicke des Substrats (102) hindurch, die bzw. der der elektronischen Schaltung (108) gegenüberliegend so angeordnet ist, dass eine Bodenwand der zweiten Durchkontaktierung bzw. des Grabens (110) von der elektronischen Schaltung (108) mit einem Abstand ungleich Null entfernt ist.

16. Verfahren nach Anspruch 15,
umfassend das Ausbilden von mehreren zweiten Durchkontaktierungen bzw. Gräben (110), die durch die Rückseite (106) des Substrats (102) und durch einen Teil der Dicke des Substrats (102) hindurchtreten, wobei die Abmessungen einer jeden der zweiten Durchkontaktierungen bzw. Gräben (110) bezüglich der Abmessungen der weiteren zweiten Durchkontaktierungen bzw. Gräben (110) aleatorisch gewählt sind.

17. Verfahren nach einem der Ansprüche 15 oder 16, umfassend das Ausbilden von zumindest einer dritten elektrisch leitenden Durchkontaktierung (302), die durch das Substrat (102) tritt und dazu bestimmt ist, zumindest einen Teil der zweiten elektrischen Verbindung (102, 118b, 308) zu bilden.

## Claims

1. Electronic chip (100 - 400) comprising at least:
- an electronic circuit (108) located at a front face (104) of a substrate (102) ;
- at least one capacitive element (115, 115a, 115b) placed at least at a back face (106) of the substrate (102) and at least partly facing the electronic circuit (108), and electrically connected to the electronic circuit (108) by at least one first (116, 118a) and second (102, 118b, 308) electrical connections, the first electrical connection (116, 118a) including at least one first electrically conducting via (116) passing through the substrate (102), the electronic circuit (108) being adapted to measure the value of the electrical capacitance of the capacitive element (115, 115a, 115b) between the first (116, 118a) and the second (102, 118b, 308) electrical connections, and
- at least one second via or a trench (110) passing through the back face (106) of the substrate (102) and a part of the thickness of the substrate (102), and facing the electronic circuit (108) such that a bottom wall of the second via or of the trench (110) are separated from the electronic circuit (108) by a non-zero distance.

2. Electronic chip (100 - 400) according to claim 1, in which the second electrical connection (102, 118b, 308) comprises at least one third electrically conducting via (308) passing through the substrate (102) or comprises at least part of the substrate (102) that is electrically conducting or semiconducting.

3. Electronic chip (100, 200, 400) according to one of previous claims, in which the distance between the bottom wall of the second via or the trench (110) and the electronic circuit (108) is less than or equal to about 20 µm.

4. Electronic chip (100, 200) according to one of previous claims, comprising at least:
- a first dielectric layer (112) covering the side walls of the first electrically conducting via (116), the side walls and the bottom wall of the second via or the trench (110), and the back face (106) of the substrate (102),
- a first continuous electrically conducting layer (114) covering the first dielectric layer (112) at the side walls of the first electrically conducting via (116), the side walls and the bottom wall of the second via or trench (110), and at least part of the back face (106) of the substrate (102), and also covering a bottom wall of the first electrically conducting via (116),
in which the first electrically conducting layer (114) forms a first electrode of the capacitive element (115) and is electrically connected to the electronic circuit (108) through the first electrical connection (116, 118a).

5. Electronic chip (100, 200) according to claim 4, in which part of the substrate (102) placed in contact with the first dielectric layer (112) and facing the first electrically conducting layer (114) forms a second electrode of the capacitive element (115).

6. Electronic chip (100) according to one of claims 4 or 5, in which the first dielectric layer (112) and the first electrically conducting layer (114) completely fill the volumes formed by the first electrically conducting via (116 and/or the second via or trench (110).

7. Electronic chip (200) according to one of claims 4 to 6, also comprising a second structured electrically conducting layer (204) at the front face (104) of the substrate (102), forming a coil inductively coupled to at least part of the first electrically conducting layer (114), the second electrically conducting layer (204) being electrically connected to the electronic circuit (108) which is adapted to measure the value of an inductance of the coil.

8. Electronic chip (200) according to claim 7, in which said part of the first electrically conducting layer (114) corresponds to that located at the bottom wall of the second via or the trench (110).

9. Electronic chip (100, 200) according to one of claims 4 to 8, in which the first electrically conducting layer (114) comprises a material which is not transparent to wavelengths between about 100 nm and 10 µm.

10. Electronic chip according to one of claims 1 to 3, in which the capacitive element (115, 115a) comprises at least:
- a first flat electrically conducting portion (302) located at the back face (106) of the substrate (102), forming a first electrode of the capacitive element (115, 115a) and electrically connected to the electronic circuit (108);
- a second dielectric layer (304) covering at least the first flat electrically conducting portion (302);
- a second flat electrically conducting portion (306, 306a) separated from the first flat electrically conducting portion (302) by the second dielectric layer (304), forming a second electrode of the capacitive element (115, 115a) and electrically connected to the first electrically conducting via (116).

11. Electronic chip (300) according to claims 2 and 10, comprising at least one third flat electrically conducting portion (306b) separated from the first flat electrically conducting portion (302) by the second dielectric layer (304) and electrically connected to the electronic circuit (108) through at least the third electrically conducting via (308) passing through the substrate (102), and in which the first flat electrically conducting portion (302) and the third flat electrically conducting portion (306b) form a first electrode and a second electrode respectively of a second capacitive element (115b) located at the back face (106) of the substrate (102) and at least partly facing the electronic circuit (108).

12. Electronic chip (400) according to claims 2 and 10, in which the first flat electrically conducting portion (302) is in contact with an electrically conducting material that fills at least the second via or the trench (110) and is electrically connected to the electronic circuit (108) through at least the third electrically conducting via (308) passing through the substrate (102).

13. Electronic chip (300, 400) according to claim 2 and one of claims 10 or 11, in which the first flat electrically conducting portion (302) is connected to the electronic circuit (108) through at least a part of the substrate (102) which is electrically conducting or semiconducting.

14. Electronic chip (100, 200, 400) according to one of previous claims, comprising several second vias or trenches (110) passing through the back face (106) of the substrate (102) and part of the thickness of the substrate (102) and having different dimensions.

15. Method of manufacturing an electronic chip (100 - 400) comprising at least the following steps:
- making an electronic circuit (108) at a front face (106) of a substrate (102);
- fabrication of at least one capacitive element (115, 115a, 115b) at at least one back face (106) of the substrate (102) and at least partly facing the electronic circuit (108), and at least one first (116, 118a) and one second (102, 118b, 308) electrical connections such that the first electrical connection (116, 118b) comprises at least one first electrically conducting via (116) passing through the substrate (102) and electrically connecting the capacitive element (115, 115a, 115b) to the electronic circuit (108), the electronic circuit (108) being adapted to measure the value of the electrical capacitance of the capacitive element (115, 115a, 115b) between the first (116, 118a) and the second (102, 118b, 308) electrical connections, and
- fabrication of at least one second via or trench (110) passing through the back face (106) of the substrate (102) and part of the thickness of the substrate (102), and located facing the electronic circuit (108) such that a bottom wall of the second via or the trench (110) is at a non-zero distance from the electronic circuit (108).

16. The method according to claim 15, including the fabrication of several second vias or trenches (110) passing through the back face (106) of the substrate (102) and part of the thickness of the substrate (102), the dimensions of each of the second vias or trenches (110) being chosen randomly relative to the dimensions of the other second vias or trenches (110).

17. The method according to one of claims 15 or 16, comprising fabrication of at least one third electrically conducting via (302) passing through the substrate (102) and that will form at least part of the second electrical connection (102, 118b, 308).
